# EUROPEAN PATENT APPLICATION

(11) **EP 4 096 227 A1**
(43) Date of publication of application: **30.11.2022**
(21) Application number: 22185256.9
(22) Date of filing: 02.01.2019
(51) Int. Cl.: H04N 21/242, H04N 21/43, H04N 21/8547, H04N 21/233, H04N 21/234, H04N 21/858

(54) **COORDINATES AS ANCILLARY DATA**

(30) Priority: 02.01.2018 US 201815860438
(62) Divisional of application: 19703208.9
(71) Applicant: Source Digital, Inc., Barto, PA 19504 (US)
(72) Inventor: PHILLIPS, Michael, MELROSE, 02176 (US); GREENE, Patrick, VAN NUYS, 91401 (US); FRECON, III, Henry, BARTO, 19504 (US)
(74) Representative: Ström & Gulliksson AB

(57) **Abstract**

Coordinates as ancillary data in a media environment driven content distribution platform may include obtaining synchronization data and ancillary data that identifies a set of coordinates representing a location within a visual portion of the audiovisual content, the ancillary data pegged to instants in the synchronization data, and communicating the synchronization data and the ancillary data pegged to the instants in the synchronization data such that subsequent alignment of the synchronization data to the audiovisual content synchronizes the set of coordinates representing the location within the visual portion of the audiovisual content.

## Description

### BACKGROUND

Media content is produced, processed, and then transmitted to consumers. In addition to traditional media content, the proliferation of electronic communication technologies has allowed for mass delivery of ancillary data related to or enhancing the content. For example, technologies such as instant messaging provide a medium by which to deliver electronic information to one person or a large number of people very quickly. Electronic devices including, for example, personal computers, mobile phones, personal digital assistants, and television set-top boxes (e.g., cable set top boxes, satellite set top boxes, etc.), provide ready access to consumers of information. The type and content of ancillary data that may be delivered via modern communication technologies varies greatly and comprises everything from personal information, to informational content, to advertisement. Ancillary data can take on various forms from simple text, to graphics, to video, to content containing numerous layers of data.

But current technologies are deficient in extracting such ancillary data for subsequent processing. Current methods of synchronization of content and ancillary data, for example, may require an explicit data connection between the source and the target or consumer and are often unidirectional. Other current methods of synchronization may rely on metadata which may or may not be present all the way through the signal chain as different facilities will use various workflows which may or may not support metadata or the delivery format container is not well suited to contain metadata other than the essence itself.

Moreover, conventionally, ancillary data has been restricted to the types described above (e.g., text, graphics, video, etc.) This limitation in the types of ancillary data available limits the utilization of both media content and ancillary data.

### SUMMARY OF THE INVENTION

The present disclosure provides methods and systems to address these problems. The present disclosure describes a dynamic combination of audio or time code and Automatic Content Recognition (ACR) technologies, including fingerprinting to trigger actions in the downstream pipeline carrying content from production to consumers. These actions preserve the original content and quality, enable compliance and acceptable integration of unknown content, provide multiple paths for conditional access to upstream databases, as well as a return path. The present disclosure provides a path for ancillary data synchronization, enabling indirect connectivity and bypassing data stripping roadblocks. Adding localized ACR including fingerprinting to compare, for example, live events to events stored in a database enables the chain to be bypassed and provides a mechanism for feedback of data to indicate synchronization as well as provide changes, updates and additional new information to the database. It provides a way to store and retrieve time-aligned feature-rich data about the content which can be used for numerous value added aspects such as e-commerce, data tracking, search, data relationships, and finely grained audience measurement among other uses.

Moreover, the present disclosure provides a new kind of ancillary data, coordinates such as, for example, coordinates of the field of view of a visual portion of audiovisual content. This new ancillary data type allows for more advanced utilization of the audiovisual content and ancillary data in general. It creates a virtual representation of the data that aligns with the content in the visual cortex so that it can act as a synthetic wrapper around any content play back environment of the content, and expose the related ancillary data to the viewer.

The accompanying drawings, which are incorporated in and constitute a part of the specification, illustrate various example systems, methods, and so on, that illustrate various example embodiments of aspects of the invention. It will be appreciated that the illustrated element boundaries (e.g., boxes, groups of boxes, or other shapes) in the figures represent one example of the boundaries. One of ordinary skill in the art will appreciate that one element may be designed as multiple elements or that multiple elements may be designed as one element. An element shown as an internal component of another element may be implemented as an external component and vice versa. Furthermore, elements may not be drawn to scale.

**Figure 1A** illustrates a schematic diagram of an exemplary method for synchronizing content including audio to ancillary data including coordinates of the visual portion of the content.

**Figure 1B** illustrates a schematic diagram of an exemplary method for synchronizing the ancillary data including coordinates of the visual portion of the content to ancillary data representing a second set of coordinates.

**Figure 1C** illustrates a schematic diagram of an exemplary method for synchronizing ancillary data that includes three-dimensional coordinates.

**Figure 1D** illustrates a schematic diagram of an exemplary method for synchronizing ancillary data representing a two-dimensional set of coordinates to ancillary data representing a three-dimensional set of coordinates.

**Figure 2** illustrates a block diagram of an exemplary system for synchronizing ancillary data to content including audio.

**Figure 3** illustrates a block diagram of the exemplary system including details at the content distributor.

**Figure 4** illustrates a block diagram of the exemplary system including details at the consumer.

**Figure 5** illustrates a block diagram of the exemplary system including details at the storage location.

**Figure 6** illustrates a flow diagram for an exemplary method for synchronizing ancillary data to content including audio.

**Figure 7A** illustrates a flow diagram for an exemplary method for synchronizing ancillary data to content including audio.

**Figure 7B** illustrates a flow diagram for an exemplary method for a media environment driven content distribution platform.

**Figure 8** illustrates a block diagram of an exemplary machine for synchronizing ancillary data to content including audio.

### DETAILED DESCRIPTION

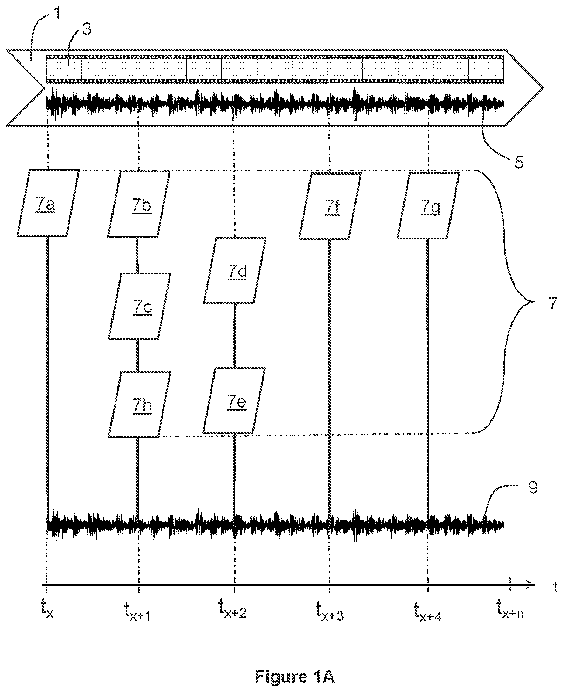

**Figure 1A** illustrates a schematic diagram of an exemplary method for synchronizing content including audio to ancillary data including coordinates of the visual portion of the content. Figure 1A shows an audiovisual content 1, which includes a visual portion 3 and an audio portion 5. The audiovisual content 1 may be a movie, a TV show, a sports event (e.g., basketball game), Internet video, a video game, a virtual reality (VR), augmented reality (AR), or mixed reality (MR) environment, or audio only programs via radio, Internet, etc.

Figure 1A also shows ancillary data 7. The ancillary data 7 is data that is related to the content and may include data describing the content such as content name or content identification data, data about a script played out in the content, data about wardrobe wore by characters in the content, data including comments from performers, producers, or directors of the content, an Uniform Resource Locator (URL) to a resource that includes information about the content, data about music in the audio of the content, etc. Ancillary data 7 may include commercial data such as advertisement data. Ancillary data 7 may also include user data such as comments from viewers of the content (e.g., twitter messages, etc.) Ancillary data 7 may also include professional or technical data such as statistics of the content's audio including, for example, loudness or dynamic range scaling of the content's audio, etc. Ancillary data 7 may also include block chain level access to another application.

As can be seen from the above examples, what constitutes ancillary data 7 may vary widely and may be collected from a variety of sources. Another example of ancillary data are coordinates of the visual portion 3 of the content 1. This new type of ancillary data may allow for more advanced utilization of the audiovisual content and ancillary data in general.

A significant issue that arises with ancillary data is synchronization; as a practical matter, how exactly is the ancillary data 7 time-aligned to the audiovisual content 1. Current methods of synchronization of content and ancillary data require an explicit data connection between the content's source and the target or consumer. This explicit timing data communicates the timing to equipment at the consumer premises. These methods are also usually unidirectional from the source or content provider to the target or consumer, which is a limitation. Other current methods of synchronization rely on metadata attached to the content, which may or may not be present all the way through the signal chain from the source or content provider to the target or consumer since different facilities will use various workflows or content container formats which may or may not support metadata.

As shown in figure 1A, the audiovisual content 1 includes the visual portion 3 and audio 5. Figure 1A also illustrates a representation 9 of the audio portion 5 of the audiovisual content 1 in the form of an audio waveform signature. The representation 9 matches the audio portion 5 of the audiovisual content 1 at least to the extent that the audio portion 5 is identifiable from the representation 9 along the time t. In the embodiment of figure 1A, the ancillary data 7 are each pegged to the representation 9 at instants of the representation 9 corresponding to the instants of the audio portion 5 to which the ancillary data 7 is aligned. In one embodiment, the ancillary data 7 may be pegged to a duration (and not merely one instant) on the representation 9. In such embodiment, the ancillary data 7 may be pegged to two (or more) instants on the representation 9 representing a start and an end, respectively, of the duration on the representation 9 (e.g., a movie scene). In another embodiment, the ancillary data 7 may be pegged to start instant and a duration on the representation 9 applicable to the ancillary data 7 defined. In such embodiment, the ancillary data 7 may be pegged to the starting (or ending) instant on the representation 9 representing a start and an end, respectively, of the duration on the representation 9 (e.g., a movie scene) and the duration specified as an absolute term.

In the example of figure 1A, ancillary data A is pegged to the instant of representation 9 corresponding to time tₓ of the audiovisual content 1. Ancillary data 7b, 7c, and 7h are pegged to the instant of representation 9 corresponding to time tₓ₊₁ of the audiovisual content 1. Ancillary data 7d and 7e are pegged to the instant of representation 9 corresponding to time tₓ₊₂. Ancillary data 7f is pegged to the instant of representation 9 corresponding to time tₓ₊₃ of the audiovisual content 1 and ancillary data 7g is pegged to the instant of representation 9 corresponding to time tₓ₊₄ of the audiovisual content 1.

Each of the ancillary data 7 and the representation 9 may then be stored in a database that may be made accessible to future users or viewers of the audiovisual content 1. This way, when the audiovisual content 1 is distributed to those users or viewers, the representation 9 as well as the ancillary data 7 pegged to the representation 9 may be available to those users or viewers.

At the user's premises, the audio portion 5 of the audiovisual content 1 being received may be compared real-time to the representation 9 to synchronize the audio portion 5 and hence the audiovisual content 1 to the representation 9. Moreover, since the ancillary data 7 is pegged to the instants of the representation 9 corresponding to their respective times of the audiovisual content 1, the ancillary data 7 may be synchronized to the audiovisual content 1 even in the absence of explicit timing data.

In the illustrated embodiment of figure 1A, ancillary data 7a is aligned to (i.e., it appears at or relates to) a time tₓ of the audiovisual content 1. Ancillary data 7b and 7c appear at or relate to a time tₓ₊₁ of the audiovisual content 1. Ancillary data 7d and 7e appear at or relate to time tₓ₊₂. Ancillary data 7f appears at or relates to time tₓ₊₃ of the audiovisual content 1 and ancillary data 7g appears at or relates to time tₓ₊₄. For example, ancillary data 7a at tₓ may indicate the content's name, True Blood, season 2, episode 2. At time tₓ₊₁ (e.g., at 12m 2s) ancillary data 7b describes Sookie Stackhouse (character), played by Anna Paquin (actor) is wearing Manolo Blahnik Hangisi 105mm satin pump shoes (accessories) while ancillary data 7c indicates that the music is Beethoven's Moonlight Sonata performed by the London Symphony Orchestra. Ancillary data 7d and 7e may be twitter messages received at time tₓ₊₂ in which users express their reactions to the audiovisual content 1 or a particularly scene in the audiovisual content 1. Ancillary data 7f may indicate a change at tₓ₊₃ in the prescribed loudness or dynamic range scaling of the content's audio due to a commercial break or can be made more granular than just entire program. Ancillary data 7g may indicate a change at tₓ₊₄ in the prescribed loudness or dynamic range scaling of the content's audio due to a return to the audiovisual content 1 from the commercial break.

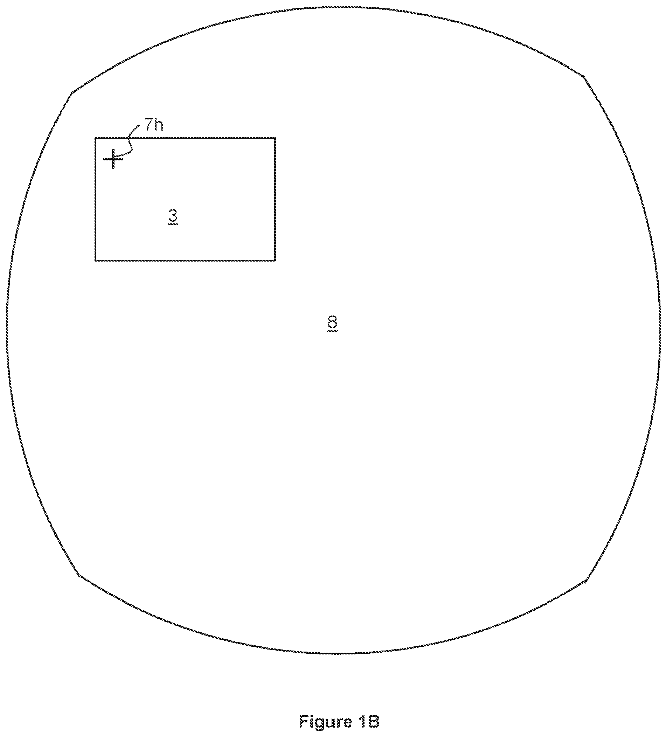

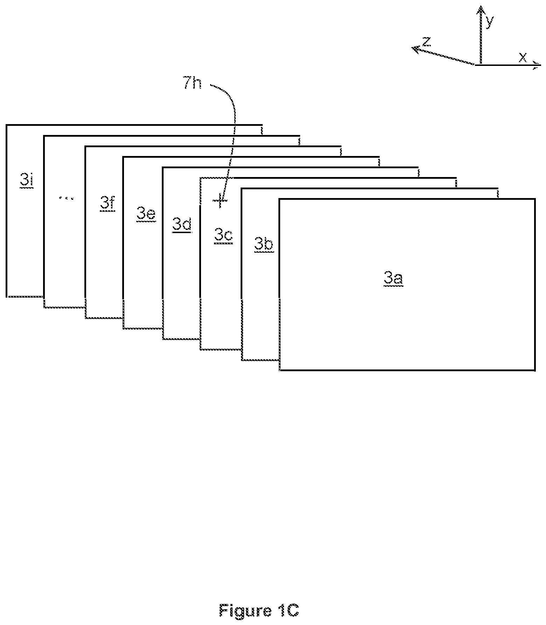

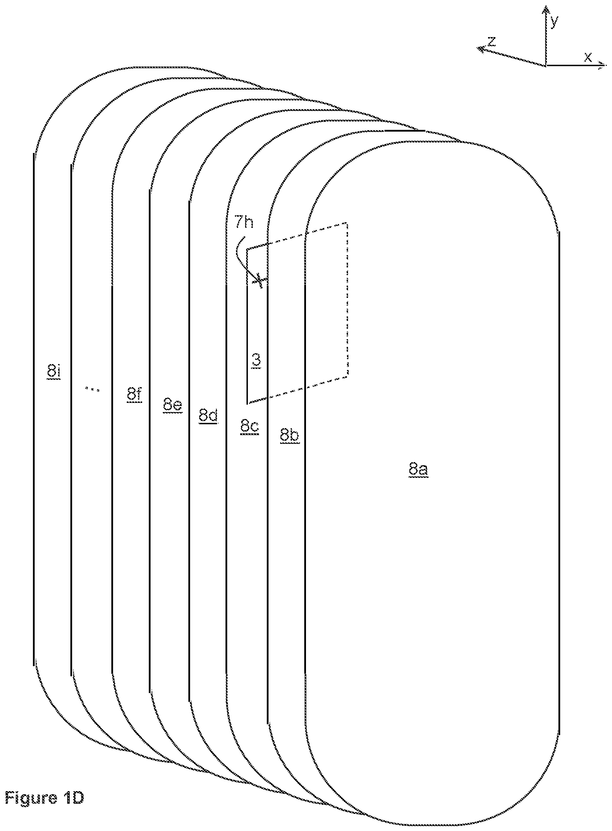

Another type of ancillary data may be coordinate data of the visual portion 3 of the content 1. For example, ancillary data may include data that identifies a set of coordinates representing a location within the visual portion 3 of the audiovisual content 1 and data that identifies the center and shape of an object located within the visual portion 3 of the audiovisual content 1 at the location represented by the set of coordinates. In figure 1, the ancillary data 7h may be a set of x, y coordinates (True Blood being a two-dimensional TV show) corresponding to the visual portion 3 of the content 1. The coordinates 7h correspond to the location on the visual portion 3 of ancillary data 7b, Sookie Stackhouse's Manolo Blahnik Hangisi 105mm satin pump shoes.

With this information being part of the ancillary data 7, a user may query the ancillary data system for audiovisual content in which Manolo Blahnik Hangisi 105mm satin pump shoes appear. Search results can be Manolo Blahnik, and/or 105mm satin pumps (product). The result of the query would be, not only True Blood, season 2, episode 2 as the audiovisual content, but also tₓ₊₁ (e.g., at 12m 2s) as the time + duration into the audiovisual content 1 in which the shoes appear and the coordinates x, y as the precise location of the shoes on the visual portion 3. Alternatively, the user may query the ancillary data system for audiovisual content in which Manolo Blahnik Hangisi 105mm satin pump shoes appear at coordinates x, y. The result of the query would be True Blood, season 2, episode 2 at time tₓ₊₁ (e.g., at 12m 2s).

Similarly, with the coordinate set ancillary data available, a user may query the ancillary data system for what ancillary data is at a location within the visual portion of an audiovisual content identified by a set of specific point, or shape coordinates. For example, the user may search for what is at coordinates x, y at time tₓ₊₁ or from within a given shape of the audiovisual content 1, True Blood, season 2, episode 2. A result of the query would be Manolo Blahnik Hangisi 105mm satin pump shoes. To query the system the user may, for example, touch the screen of a device at coordinates x, y at time tₓ₊₁ of the audiovisual content 1, True Blood, season 2, episode 2. The system may detect the touch at the specific location, search ancillary data, and output information identifying the object(s) at the specific location.

The above query combinations are merely illustrative. Many other query combinations are possible in which coordinates as ancillary data allow for more advanced utilization of the audiovisual content and ancillary data in general.

Also, figure 1A illustrates a two-dimensional example (True Blood being a two dimensional TV show) but the ancillary data system disclosed here is not limited to two dimensions and may include three-dimensional coordinates (x, y, z) for three dimensional content (e.g., 3D video games, 3D movies, 3D virtual reality, etc.) as described below.

The inclusion of coordinates as ancillary data provides further opportunities for more advanced utilization of the audiovisual content and ancillary data in general. Coordinates as ancillary data may correspond to simple relative coordinates such as, for example, coordinates x, y representing simply the location within a video frame (e.g., x = 0-1920, y = 0-1080) or a given shape (min of three coordinates if aspect ratio is known) of the content 1. However, coordinates as ancillary data may correspond to coordinates relative to alternative spaces or areas such as, for example, coordinates x, y representing the location within the video frame of the content 1 and at the same time the location within another space or area (e.g., a virtual space, a space within a video game, a space within a different audiovisual content, etc.) Coordinates as ancillary data may also correspond to absolute coordinates that can be correlated to other spaces or areas such as, for example, coordinates x, y representing the location within the video frame of the content 1 and at the same time the location within a real world space (e.g., a stadium, a city, a country, a planet, the universe, etc.)

Moreover, coordinates corresponding to alternative spaces or areas do not need to be absolute or relative to the coordinates corresponding to the location on the visual portion 3 of the content 1. These coordinates corresponding to alternative spaces or areas may simply be tied or correlated to the coordinates corresponding to the location on the visual portion 3 of the content 1. For example, the coordinates corresponding to alternative spaces or areas may be pegged as ancillary data to the corresponding instant in the synchronization data 9 to tie or correlate them to the coordinates corresponding to the location on the visual portion 3 of the content 1. These additional layer of coordinates become an additional layer of ancillary data.

**Figure 1B** illustrates an example of utilization of coordinates as ancillary data. Figure 1B illustrates a schematic diagram of an exemplary method for synchronizing the ancillary data including coordinates of the visual portion of the content to ancillary data representing a second set of coordinates. As described above, the ancillary data 7h includes coordinates that correspond to the location on the visual portion 3 of ancillary data 7b, Sookie Stackhouse's Manolo Blahnik Hangisi 105mm satin pump shoes worn during season 2, episode 2 of True Blood at time tₓ₊₁. We also know that True Blood takes place in Small-town, Louisiana. Thus, the coordinates 7h correspond, not only to the location of Sookie Stackhouse's shoes at time tₓ₊₁ of True Blood season 2, episode 2, but also to some place in Louisiana, a real-world place. Multiple locations can be referenced for the same given span of program. Where it takes place in the story, where it is actually shot and perhaps a location they are talking about or on a sign within the content. System is not limited to one piece of similar metadata, but layers of similar metadata related to the content. View 8 represents that space or location in Small-town, Louisiana or Google Earth's representation of Small-town, Louisiana. As may be seen from figure 1B, the coordinates 7h correspond to a location in Small-town, Louisiana and/or Google Earth's representation of such place. The two or more spaces (time tₓ₊₁ of True Blood season 2, episode 2 and real-world Small-town, Louisiana) are, in a sense, anchored to each other by the coordinates.

The notion of coordinates that represent, not only a location within a visual space of a single piece of audiovisual content, but also a location (or multiple locations) within alternative spaces has tremendous implications. For example, a user or mobile device may query the ancillary data system for real-world coordinates where scenes of shows, movies, games, etc. take place. The coordinates corresponding, not only to the scene/frame in the shows, movies, games, etc. in the database, but also to a real-world location could give as a result the real-world location and query real time services such as, for example, weather, etc.. In another example, a user or mobile device may query the ancillary data system for other audiovisual content (or just visual content) where scenes of shows, movies, games, etc. take place. The coordinates corresponding, not only to the scene/frame in the show, movie, game, etc. being watched, but also to scenes in other shows, movies, games, etc. could give as a result the other shows, movies, games, etc. and the time at which it appears. In yet another example, a user or mobile device may query the ancillary data system for shows, movies, games, etc. that have scenes that take place at a particular set of world coordinates. The coordinates corresponding, not only to the world location, but also to the respective shows, movies, games, etc. in the database, the system could give as a result the specific frames/scenes within shows, movies, games, etc. corresponding to the real-world location. Similar notions also apply to three-dimensional spaces.

This ability is extremely useful and not available in the prior art. The layers of spaces that could be correlated by coordinates are endless; audiovisual content may be correlated to real-world spaces and to virtual-world spaces (e.g., video games), AR, MR, etc.

Figure 1C illustrates a three-dimensional example of coordinates as ancillary data. Figure 1C illustrates a schematic diagram of an exemplary method for synchronizing ancillary data that includes three-dimensional coordinates that may occur in relation to three-dimensional content. Three-dimensional content may include stereo 3D video, 360 video (monoscopic or stereoscopic), virtual reality (VR), augmented reality (AR), etc. In three dimensions the coordinates may correspond to x, y, and z.

For three-dimensional content, coordinate z may correspond to a depth coordinate. For illustrative purposes, let's say that audiovisual content 1 (season 2, episode 2 of True Blood) is three-dimensional content. The view layers 3a-3i represent depth z of views at a time tₓ₊₁ of the audiovisual content 1. As described above, the ancillary data 7h corresponds to coordinates that indicate the location on the visual portion 3 of ancillary data 7b, Sookie Stackhouse's Manolo Blahnik Hangisi 105mm satin pump shoes worn during season 2, episode 2 of True Blood at time tₓ₊₁. The shoes being three-dimensional objects may appear at multiple depths z. However, the shoes may best be seen in the visual portion 3 of the content 1 are at a depth z = 3c.

For two-dimensional content, coordinate z may correspond to a level of zoom. For example, a high definition (HD, UHD, 4K and higher) movie includes much more information than is necessary for high definition display on a small screen such as that of a mobile device. The ancillary data system may take advantage of the availability of this additional data to provide extensive zooming without sacrificing resolution. Back to the True Blood example, it may be that Sookie Stackhouse's Manolo Blahnik Hangisi 105mm satin pump shoes are not appreciable or well seen when True Blood, season 2, episode 2 is being watched full screen on a small mobile device's screen. In such a case, the coordinates corresponding to the location of the shoes may include x, y and also z, a level of zoom at which the shoes may be properly seen. The coordinate z may be set to z = 3c so that the shoes may be seen properly in the smaller screen.

As described above for the two-dimensional example, coordinates may represent, not only a location within a visual space of a single piece of audiovisual content, but also a location (or multiple locations) within alternative spaces. The same is true for three-dimensional content. For example, a user or mobile device may query the ancillary data system for real-world three-dimensional coordinates where scenes (i.e., a particular time) of shows, movies, games, etc. take place. The coordinates corresponding, not only to the scene/frame in the shows, movies, games, etc. in the database, but also to a real-world location could give as a result the real-world three-dimensional location. In another example, a user or mobile device may query the ancillary data system for audiovisual content that has scenes that take place at a particular set of three-dimensional world (real or virtual) coordinates. The coordinates corresponding, not only to the world location, but also to the respective shows, movies, games, etc. in the database, the system could give as a result the specific frames/scenes (i.e., a particular time) within shows, movies, games, etc. corresponding to the real-world location.

Figure 1D illustrates a schematic diagram of an exemplary method for synchronizing ancillary data representing a two-dimensional set of coordinates to ancillary data representing a three-dimensional set of coordinates. Figure 1D illustrates an example in which a location 7h on a two-dimensional visual portion 3 may be correlated to a three-dimensional location. View layers 8a-8i represent depth (z direction) of a three-dimensional space or location in, for example, Small-town, Louisiana or Google Earth's representation of Small-town, Louisiana. As may be seen from figure 1D, the coordinates 7h correspond to a location in the two-dimensional True Blood, season 2, episode 2, at time tₓ₊₁ and a real-world location in three-dimensional Small-town, Louisiana and/or Google Earth's three-dimensional representation of such place. The two spaces (time tₓ₊₁ of True Blood season 2, episode 2 and real-world Small-town, Louisiana) are, in a sense, anchored to each other by the coordinates.

A user or mobile device may query the ancillary data system for real-world three-dimensional coordinates where scenes of two-dimensional shows, movies, games, etc. take place or viceversa. The coordinates corresponding, not only to the scene/frame in the shows, movies, games, etc. in the database, but also to a real-world location could give as a result the real-world three-dimensional location. In another example, a user or mobile device may query the ancillary data system for audiovisual content that has scenes that take place at a particular set of three-dimensional world (real or virtual) coordinates. The coordinates corresponding, not only to the world location, but also to the respective two-dimensional shows, movies, games, etc. in the database, the system could give as a result the specific frames/scenes within shows, movies, games, etc. corresponding to the real-world location.

Regarding authorship or collection, ancillary data 7 including coordinates as ancillary data may be obtained or collected prior to playout, broadcast, distribution or performance of the audiovisual content 1. For example, ancillary data 7 may be obtained or collected during preproduction, production, post-production, quality control, or mastering of the audiovisual content 1. Ancillary data 7 may also be obtained or collected during playout, broadcast, distribution or performance of the audiovisual content 1. For example, if the audiovisual content 1 is a TV show, ancillary data 7 may be obtained or collected during a first or subsequent broadcast of the TV show.

Coordinates as ancillary data provide additional opportunities for authorship and/or collection of ancillary data. For example, a user may watch a content 1 (e.g., True Blood season 2, episode 2) while wearing an optical head-mounted display. The display has its own set of coordinates that may be used to, for example, record which direction the user is looking through the display as well as eye position of what is being looked at (depending on system used for viewing). Coordinates as ancillary data may be used to tie coordinates corresponding to a location in the optical head-mounted display to coordinates corresponding to a location on the visual portion 3 of the content 1. The coordinates of the optical head-mounted display may be pegged as ancillary data to the corresponding instant in the synchronization data 9 to tie or correlate the coordinates corresponding to the location in the optical head-mounted display to the coordinates corresponding to the location on the visual portion 3 of the content 1.

Regarding storage and distribution, ancillary data 7 collected may be stored in a database that may be made accessible to future users or viewers of the audiovisual content 1. This way, when the audiovisual content 1 is later distributed to those users or viewers, the ancillary data 7 may be available to those users or viewers for consumption at the same time as the audiovisual content 1. The ancillary data 7 appears or manifests itself aligned in time to the audiovisual content 1.

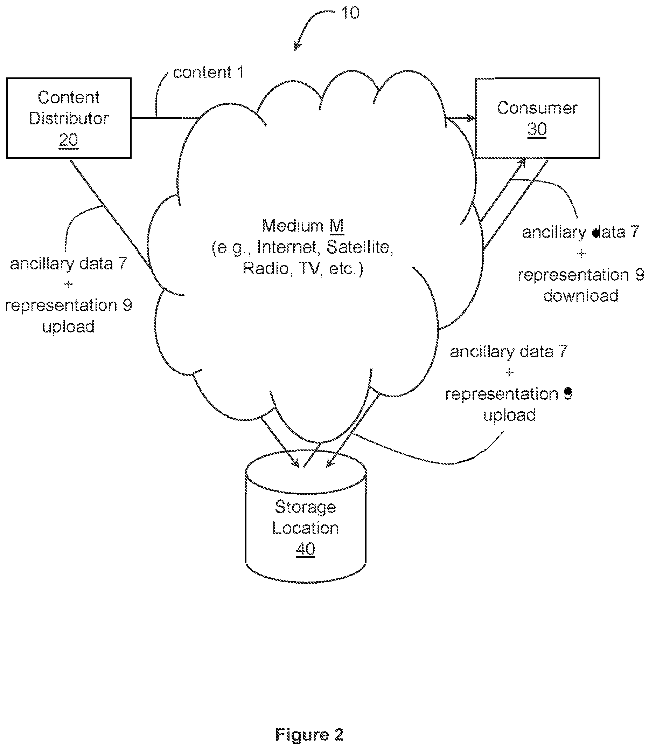

Figure 2 illustrates a block diagram of an exemplary system 10 for synchronizing ancillary data to content including audio. The system 10 includes three major components: the content distributor 20, the consumer 30, and the storage location 40. Figure 2 also shows the medium M through which the content distributor 20, the consumer 30, and the storage location 40 communicate with each other.

The element 20 is not limited to broadcasters or broadcasting facilities or equipment. In practice, the content distributor 20 may represent any facility or equipment that is part of or used in preproduction, production, postproduction, quality control, mastering equipment, broadcasting of any type (including professional or social media broadcasting), or other method of sending and distributing audio visual content, that touches the audiovisual content 1 prior to and during playout for transmission or broadcasting.

Similarly, although for ease of explanation the present disclosure refers to the element 30 as the consumer 30, the element 30 is not limited to consumers or consumer premises or equipment. In practice, the consumer 30 may represent any premise or equipment that touches the audiovisual content 1 during or post playout for transmission or broadcasting.

Also, the medium M may be any medium used to transmit content 1 or data generally such as, for example, the Internet, satellite communication, radio communication, television communication (broadcast or cable), etc. Although in the figures the medium M is shown as being shared by the content distributor 20, the consumer 30, and the storage location 40, communication between these elements does not need to take place in the same medium. So, for example, the content distributor 20 may communicate with the consumer 30 via satellite while the content distributor 20 communicates to the storage location 40 via the Internet.

In the example of figure 2, the content distributor 20 transmits the audiovisual content 1 to the consumer 30 and the ancillary data 7 and the representation 9 to the storage location 40 for storage. The consumer 30 receives the audiovisual content 1 from the content distributor 20 and the ancillary data 7 and the representation 9 from the storage location 40. Interestingly, the consumer 30 may also transmit ancillary data 7 and/or representation 9 to the storage location 40. Thus, the system 10 provides bidirectional communication by the consumer 30; the consumer 30 may participate in the creation of ancillary data 7, enhancing the ancillary data 7, the system's functionality and, ultimately, the customer's experience.

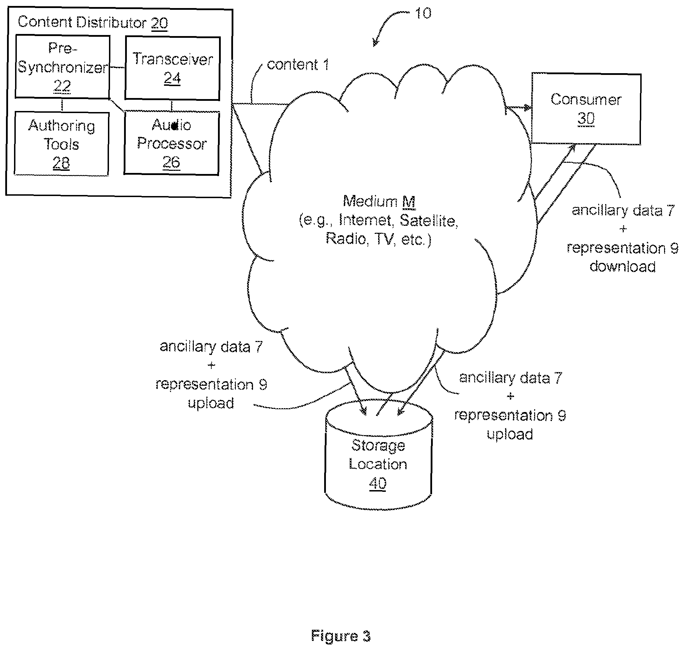

Figure 3 illustrates a block diagram of the exemplary system 10 including details at the content distributor 20. The content distributor 20 includes a machine or group of machines for synchronizing ancillary data to content. The content may include audio. In the illustrated embodiment, the content distributor 20 includes a pre-synchronizer 22 that pegs the ancillary data 7 to instants of the representation 9 (e.g., the representation of the audio portion 5 or the representation of the visual portion 3 of the audiovisual content 1 of figure 1).

The content distributor 20 may also include a transceiver 24 that communicates the audiovisual content 1 to the consumer 30 and the representation 9 and the ancillary data 7 pegged to the instants in the representation 9 to the storage location 40 via the medium M. As described above, the storage location 40 is accessible by consumer 30. Alignment of the representation 9 to the content's audio 5 (or the content's video 3 in the case where the representation 9 corresponds to the visual portion 3) upon subsequent playout, broadcast, distribution, performance, etc. of the audiovisual content 1 synchronizes the ancillary data 7 pegged to the instants in representation 9 to the audiovisual content 1.

The content distributor 20 may also include an audio processor 26, which may process the audio portion 5 of the audiovisual content 1 to create a representation of the content's audio 5 such as, for example, the audio waveform signature of figure 1A. In an alternative embodiment, the content distributor 20 may also include a video processor, which may process the visual portion 3 of the audiovisual content 1 to create a representation of the content's video 3 instead of or in addition to the audio waveform signature of figure 1A. The transceiver 24 may then communicate the representation 9 (e.g., the signature) and the ancillary data 7 pegged to the instants in the representation 9 to the storage location 40.

In one embodiment, the pre-synchronizer 22 creates a link to the storage location 40. The link may be a Uniform Resource Identifier (e.g., URL) or similar location identifier or locator. The audio processor 26 may insert the link to the storage location 40 into metadata of the audiovisual content 1 or specifically metadata of the content's audio 5 or content video 3. The audio portion 5 may be encoded as but not limited to Dolby AC-4, AC-3 or E-AC-3 or MPEG-H, all of which can carry metadata. The consumer 30 may extract the link to the storage location 40 from the metadata of the audiovisual content 1 or of the content's audio 5 or video 3. Having the link to the storage location 40, the consumer 30 may then communicate to the storage location 40 to obtain the information stored in the storage location 40 or to store information therein.

In one embodiment, the audio processor 26 analyzes the content's audio 5 to collect statistics of the audio portion 5 including, for example, loudness or dynamic range scaling of the audio portion 5. The audio processor 26 may insert the statistics of the content's audio 5 into metadata of the audiovisual content 1, of the content's audio 5, or of the content's video 3. The consumer 30 may extract the statistics of the content's audio 5 from the metadata.

In one embodiment, the transceiver 24 communicates the statistics of the content's audio 5 to the storage location 40 in addition to the representation 9, and the ancillary data 7 pegged to the instants in the representation 9. The consumer 30 may obtain the statistics of the content's audio 5 from the storage location 40.

Having the statistics of the content's audio 5, the consumer 30 may then adjust audio to be played at or distributed from the consumer 30 premises based on the statistics of the content's audio 5 extracted from the metadata.

As discussed above, the pre-synchronizer 22 may collect the ancillary data 7 during a previous playout or performance of the audiovisual content 1. For example, the audiovisual content 1 may be a basketball game which is originally broadcasted live. Ancillary data 7 may include up-to-date game statistics (e.g., points, rebounds, assists, etc.) Having access to this ancillary data 7 and its corresponding timing, the pre-synchronizer 22 may peg the ancillary data 7 to instants in a representation 9 (e.g., a waveform signature) corresponding to the appropriate timing in the game when the statistics are accurate. The transceiver 24 may then transmit the ancillary data 7 and the representation 9 to the storage location 40 for the consumer 30 to have access to the information to use as described above.

The content distributor 20 may also include authoring tools 28 to collect ancillary data 7. The authoring tools 28 may allow, for example, a statistician to enter the statistics of the basketball game described above. In general, the authoring tools 28 may allow entry of ancillary data 7. The authoring tools 28 may be used to enter ancillary data describing the content such as content name or content identification data, data about a script played out in the content, data about wardrobe wore by characters in the content, data including comments from performers, producers, or directors of the content, an Uniform Resource Locator (URL) to a resource that includes information about the content, data about music in the audio of the content, etc. The authoring tools 28 may also be used to enter ancillary data 7 in the form of commercial data such as advertisement data or professional or technical data regarding or relating to the content.

The authoring tools 28 may also be used to place an object within the visual portion 3 of the audiovisual content 1. Such a location may or may not be represented by a set of coordinates. The authoring tools 28 may be used to enter such set of coordinates. The authoring tools 28 may also be used to peg a second set of coordinates (e.g., coordinates of a real-world location, coordinates representing a location within a visual portion of a second audiovisual content, etc.) as additional ancillary data to the instants in the synchronization data 9 of the audiovisual content 1 such that the first set of coordinates representing the location within the visual portion 3 of the audiovisual content 1 correlate to the second set of coordinates.

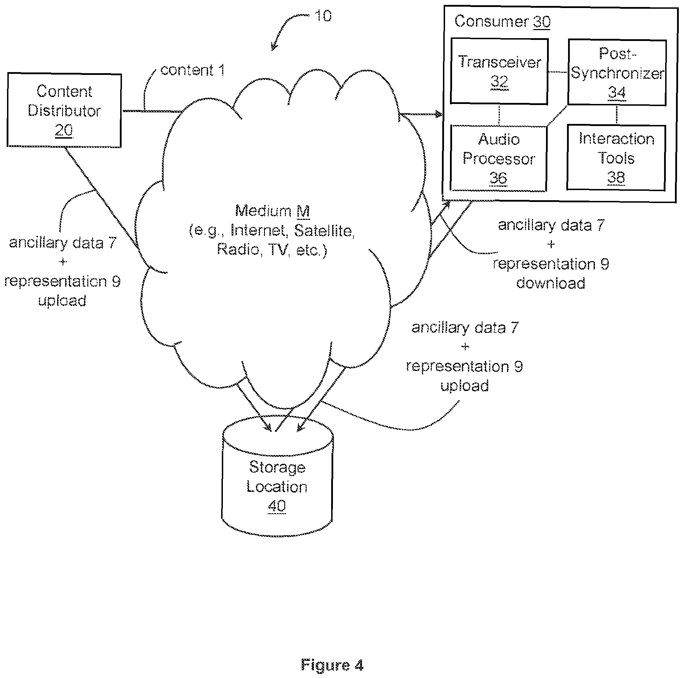

Figure 4 illustrates a block diagram of the exemplary system 10 including details at the consumer 30. The consumer 30 may include a machine or group of machines for synchronizing ancillary data 7 to content 1 including audio 5 and video 3.

In the illustrated embodiment, the consumer 30 includes a transceiver 32 that receives the audiovisual content 1 from the content distributor 20 and the representation 9 and the ancillary data 7 pegged to instants in the representation 9 from the storage location 40.

The consumer 30 may also include a post-synchronizer 34 that aligns the representation 9 to the content's audio 5 or video 3 thereby synchronizing the ancillary data 7 to the audiovisual content 1 as described above. The specific methodology by which the post-synchronizer 34 aligns the representation 9 to the content's audio 5 or the content's video 3 is not crucial to the present invention. Mechanisms by which such alignment may be accomplished include a variation of what is known as Automatic Content Recognition (ACR) and specifically a variation of what is known as fingerprinting. ACR are technologies used to identify or recognize content played on a media device or present in a media file. Acoustic fingerprinting generates unique fingerprints from the content itself. Fingerprinting techniques work regardless of content format, codec, bitrate and compression techniques. This makes it possible to use across networks and channels. Continuously comparing an ongoing, real-time fingerprint of the audiovisual content 1 to the representation 9 may be used to synchronize the ancillary data 7 timeline of the audiovisual content 1. An example of such fingerprinting techniques may be found in U.S. Pat. No. 9,786,298 with an issue date of October 10, 2017, which is incorporated here by reference in its entirety.

The consumer 30 may also include an audio processor 36 that receives the content's audio 5 from the transceiver 32. In one embodiment, the audio processor 36 may extract metadata from the audiovisual content 1 or from the content's audio 5 and, from the metadata, the audio processor may extract the link to the storage location 40 as described above. Having the link to the storage location 40, the transceiver 32 may then communicate to the storage location 40 to obtain the information stored in the storage location 40 or to store information therein.

Alternatively or in addition, the link to the storage location 40 may be distributed to the consumer 30 in a subscription basis or otherwise provided to the consumer 30. This way, if the audiovisual content 1 as received by the consumer 30 does not include metadata or the metadata does not include the link to the storage location 40, the consumer 30 may still access the storage location 40.

In one embodiment, the audio processor 36 extracts statistics of the content's audio 5 (e.g., loudness or dynamic range scaling) stored in the metadata as described above instead of or in addition to extracting the link to the storage location 40. In one embodiment, the transceiver 32 receives the statistics of the content's audio 5 from the storage location 40 in addition to the representation 9, and the ancillary data 7. Having the statistics of the content's audio 5, the audio processor 36 may then process audio to be played at or distributed from the consumer 30 premises based on the statistics of the content's audio 5 obtained from the storage location 40.

In one embodiment, when the audiovisual content 1 or the content's audio 5 includes metadata, the audio processor processes audio to be played at or distributed from the consumer 30 premises using the statistics of the content's audio (e.g., loudness or dynamic range scaling) stored in the metadata. On the other hand, when the audiovisual content 1 or the content's audio 5 does not include metadata, the audio processor 36 processes audio to be played at or distributed from the consumer 30 premises using the statistics of the content's audio 5 stored at the storage location 40.

In one embodiment, the audio processor 36 compares the content's audio 5 to the representation 9 obtained from the storage location 40. Based on that comparison, the audiovisual content 1 may be identified. That is, if the content's audio 5 and the representation 9 match within a set of parameters, the audiovisual content 1 may be identified as corresponding to the representation 9 or vice versa. Similarly, if the content's audio 5 and the representation 9 do not match within the set of parameters, the audiovisual content 1 may be said to not correspond to the representation 9 or vice versa. U.S. Pat. App. No. 14/699,658 filed on April 29, 2015 incorporated here by reference discloses systems and methods for authenticating content via loudness signature. The systems and methods disclosed therein may be used for identification of the audiovisual content 1. Other systems and methods different from those disclosed in the '658 application may also be used for identification of the audiovisual content 1. In another embodiment, a video processor compares the content's video 3 to the representation 9 obtained from the storage location 40. Based on that comparison, the audiovisual content 1 may be identified. That is, if the content's video 3 and the representation 9 match within a set of parameters, the audiovisual content 1 may be identified as corresponding to the representation 9 or vice versa. Similarly, if the content's video 3 and the representation 9 do not match within the set of parameters, the audiovisual content 1 may be said to not correspond to the representation 9 or vice versa.

The consumer 30 may also include interaction tools 38 that present (e.g., display) the ancillary data 7 in synchronicity with presentation of the audiovisual content 1. The interaction tools 38 present the ancillary data 7 in synchronicity with presentation of the audiovisual content 1 by relying on the aligning of the representation 9 to the content's audio 5 or the content's video 3. This aligning synchronizes the ancillary data 7, which is pegged to the instants in the representation 9, to the audiovisual content 1. In the basketball game example described above, the interaction tools 38 may display the up-to-date statistics of the basketball game in synchronicity with presentation of the game even when the game is replayed many years after the game was first televised live. The interaction tools 30 may also display in relation to an object (e.g., a basketball jersey) appearing on the visual portion an interactive link clicking of which directs the user to more information about the object such as, for example, a website at which to purchase the object or block chain level information that facilitates a transaction involving the object.

Because the storage location 40 stores the ancillary data 7 and the representation 9, the information may be available for access at any time. For example, the consumer 30 may have recorded the basketball game (i.e., the audiovisual content 1) in a digital video recorder (DVR) or obtain a recording of the game in any other way. A few days later the consumer may watch the game. The transceiver 32 may obtain the game (i.e., the audiovisual content 1) from the DVR (or any other way the consumer 30 obtained the content) and may also obtain the representation 9 and the ancillary data 7 from the storage location 40. The interaction tools 30 may then display the up-to-date statistics of the basketball game or the interactive link in synchronicity with presentation of the game, even when the game is replayed days after the game was first televised live.

In one embodiment, the interaction tools 38 may also be used to collect ancillary data 7. For example, during a playout, broadcast, distribution or performance of the audiovisual content 1, the consumer may enter, via the interaction tools 38, ancillary data 7 such as notes or comments relating to the audiovisual content 1 or specific scenes or portions of the audiovisual content 1. The post-synchronizer 34 may then peg the ancillary data 7 entered via the interaction tools 38 to instants of the representation 9 corresponding to instants in the audiovisual content 1 and store the ancillary data 7 to the storage location 40. In this case the representation 9 may be a) a representation obtained from the storage location 40 or b) a representation created locally at the consumer 30 by the audio processor 36 and stored to the storage location 40 with the ancillary data 7.

The interaction tools 38 may also be used to place an object within the visual portion 3 of the audiovisual content 1. Such a location may or may not be represented by a set of coordinates. The interaction tools 38 may be used to enter such set of coordinates. The interaction tools 38 may also be used to peg a second set of coordinates (e.g., coordinates of a real-world location, coordinates representing a location within a visual portion of a second audiovisual content, etc.) as additional ancillary data to the instants in the synchronization data 9 of the audiovisual content 1 such that the first set of coordinates representing the location within the visual portion 3 of the audiovisual content 1 correlate to the second set of coordinates.

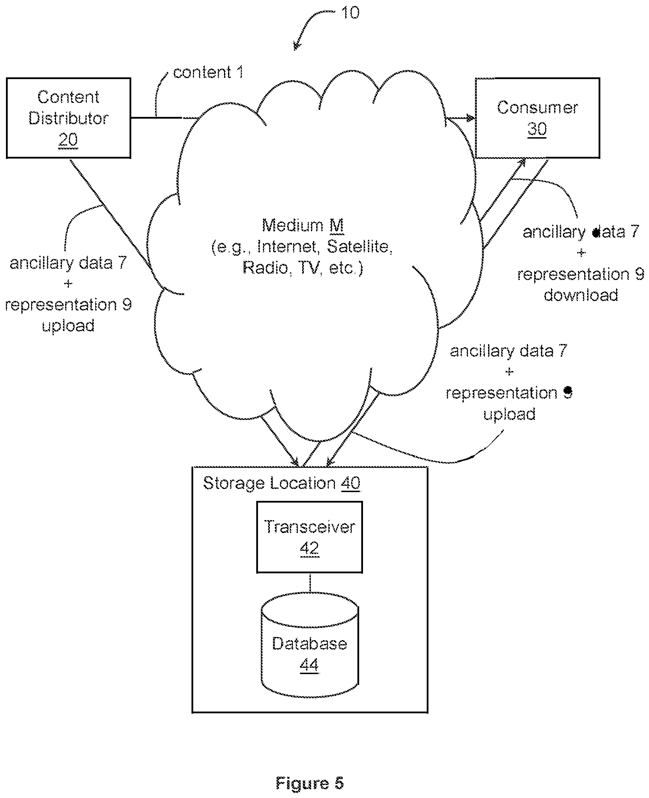

Figure 5 illustrates a block diagram of the exemplary system 10 including details at the storage location 40. The storage location 40 may include a machine or group of machines for synchronizing ancillary data to content including audio. The storage location 40 may include a transceiver 42 that communicates (i.e., transmits and receives) the representation 9 and the ancillary data 7. The storage location 40 may also include a database 44 that stores the representation 9 and the ancillary data 7 pegged to instants in the representation 9.

In one embodiment, the transceiver 42 communicates and the database 44 stores statistics of the content's audio 5 (e.g., loudness or dynamic range scaling) as ancillary data 7 or in addition to ancillary data 7 as described above. In one embodiment, the transceiver 42 continues to communicate and the database 44 continues to store ancillary data 7 during subsequent playout, broadcast, distribution or performance of the audiovisual content 1 as described above.

The storage location 40 may be a location accessible to the content distributor 20 and the consumer 30, such as the cloud or a local archive with general accessibility (e.g., via a link as described above) that may be controlled by subscription, password, etc.

The system 10 may be implemented using software, hardware, analog or digital techniques.

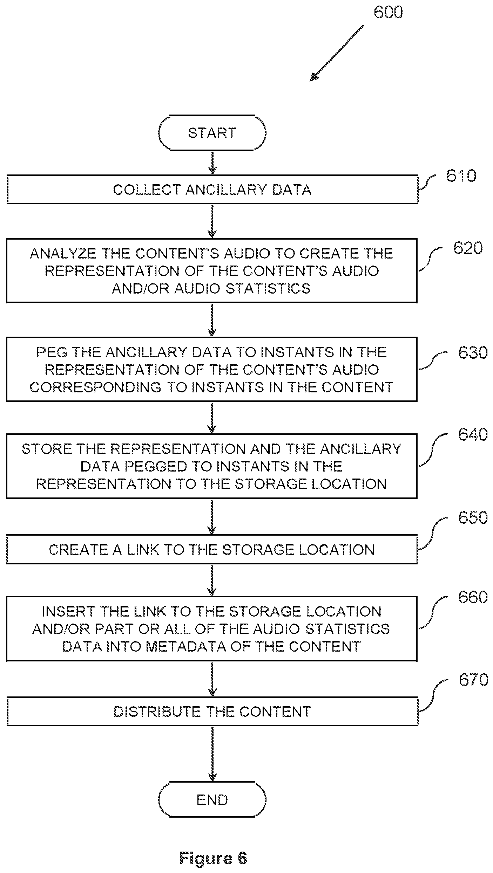

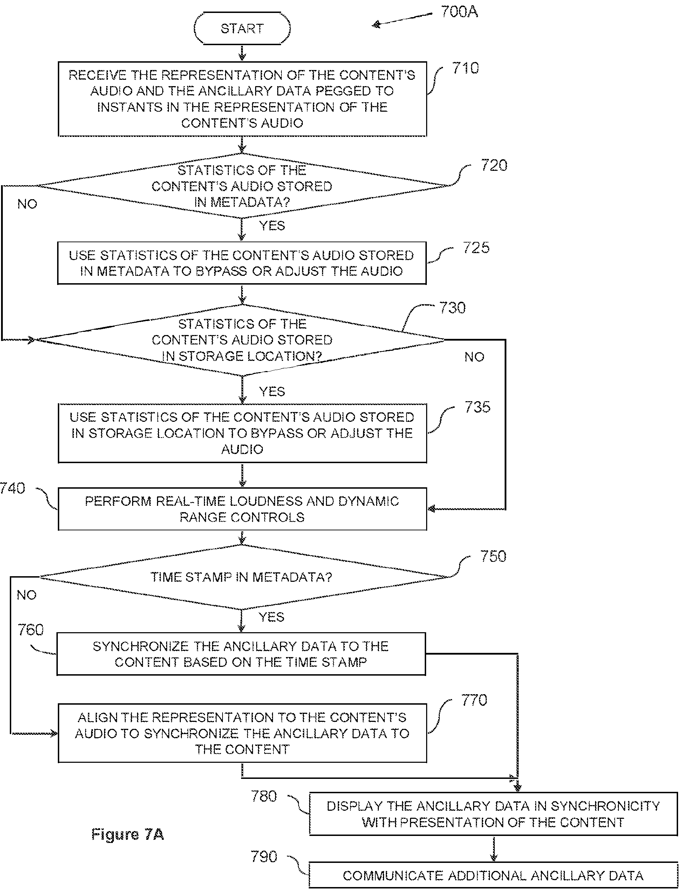

Exemplary methods may be better appreciated with reference to the flow diagrams of **figures 6** and **7A****-7B.** While for purposes of simplicity of explanation, the illustrated methodologies are shown and described as a series of blocks, it is to be appreciated that the methodologies are not limited by the order of the blocks, as some blocks can occur in different orders or concurrently with other blocks from that shown and described. Moreover, less than all the illustrated blocks may be required to implement an exemplary methodology. Furthermore, additional methodologies, alternative methodologies, or both can employ additional blocks, not illustrated.

In the flow diagrams, blocks denote "processing blocks" that may be implemented with logic. The processing blocks may represent a method step or an apparatus element for performing the method step. The flow diagrams do not depict syntax for any particular programming language, methodology, or style (e.g., procedural, object-oriented). Rather, the flow diagrams illustrate functional information one skilled in the art may employ to develop logic to perform the illustrated processing. It will be appreciated that in some examples, program elements like temporary variables, routine loops, and so on, are not shown. It will be further appreciated that electronic and software applications may involve dynamic and flexible processes so that the illustrated blocks can be performed in other sequences that are different from those shown or that blocks may be combined or separated into multiple components. It will be appreciated that the processes may be implemented using various programming approaches like machine language, procedural, object oriented or artificial intelligence techniques.

**Figure 6** illustrates a flow diagram for an exemplary method 600 for synchronizing ancillary data to content including audio.

The method 600 includes at 610 collecting the ancillary data 7. Collection may take place prior to, during or post playout, broadcast, distribution or performance of the content as described above. The ancillary data 7 is data that is somehow related to the content and may include data describing the content such as content name or content identification data, data about a script played out in the content, data about wardrobe wore by characters in the content, data including comments from performers, producers, or directors of the content, an Uniform Resource Locator (URL) to a resource that includes information about the content, data about music in the audio of the content, etc. Ancillary data 7 may include commercial data such as advertisement data. Ancillary data 7 may also include user data such as comments from viewers of the content (e.g., twitter messages, etc.) Ancillary data 7 may also include professional or technical data such as statistics of the content's audio including, for example, loudness or dynamic range scaling of the content's audio, etc. Ancillary data may also include data that identifies a) a set of coordinates representing a location within a visual portion of the audiovisual content and b) an object located within the visual portion of the audiovisual content at the location represented by the set of coordinates, the ancillary data pegged to instants in the synchronization data

At 620, the method 600 further includes analyzing the audio portion 5 (or the visual portion 3) of the content to create the representation 9. The representation 9 may be created by creating an audio waveform signature of the content's audio or a signature of the content's video as described above.

Creation of the representation 9 (e.g., an audio waveform signature) of the content's audio may be accomplished as part of analysis of the audio portion 5. The audio portion 5 for the audiovisual content 1 may be analyzed and audio statistics collected on the same timeline. This can occur during a typical quality control or mastering session. Statistics that may be collected include content name or ID, the audio waveform signature, loudness and or dynamic range scaling to ensure content matches delivery specifications, and other content-specific non-real-time statistics.

At 630, the ancillary data 7 is pegged to instants in the representation 9 corresponding to instants in the audiovisual content 1. Pegging the ancillary data 7 to instants in the representation 9 means that the ancillary data 7 is time-aligned to the audiovisual content 1. This pegging may be accomplished by associating the ancillary data 7 to a representation 9 of a specific content 1 and time stamping the ancillary data 7 with times of instants in the representation 9 or other time alignment methods.

At 640, the representation 9 and the ancillary data 7 pegged to instants in the representation 9 may be stored to the storage location 40.

At 650, a link to the storage location 40 may also be created.

At 660, the link to the storage location 40 as well as part or all of the audio statistics data may be inserted into audio metadata (i.e., EMDF) for encoded or PCM+MD audio and/or the LFE channel for PCM-only audio. U.S. Patent No. 8,380,334 issued on February 19, 2013 incorporated here by reference discloses methods and systems for carrying auxiliary data within audio signals that may be used for inserting metadata into audio signals. Other systems and methods different from those disclosed in the '334 patent may also be used for inserting metadata into audio signals.

At 670, the audiovisual content 1 is distributed. The audiovisual content 1 may be delivered as it is today with audio that is encoded or baseband PCM, with or without metadata.

Figure 7A illustrates a flow diagram for an exemplary method 700 for synchronizing ancillary data to content including audio.

At 710, the method 700 includes receiving the representation 9 and the ancillary data 7 pegged to the instants in the representation 9. This combination of the representation 9 and the ancillary data 7 may be used in at least two contexts: 1) during playout for transmission and 2) upon reception of the audiovisual content 1 at the consumer's premises.

During playout for transmission, an audio processor may accept encoded or baseband PCM audio of the audiovisual content 1 with or without metadata and may also be connected to the cloud or other location where the storage location 40 resides. In this context, the method 700 may include using statistics of the content's audio to bypass or adjust an audio processor processing the content's audio.

At 720, if EMDF metadata is present or if metadata is detected within the LFE channel and statistics of the content's audio are stored in the metadata, at 725, the statistics of the content's audio 5 (e.g., loudness and other content-specific data) may be used to bypass or adjust the audio processor enabling content that is already correct to pass with minimal or no modification to maintain original quality and compliance.

At 730, if metadata or LFE data is not present or if statistics of the content's audio are not stored in the metadata, a real-time audio signature of the audio portion 5 may be compared to the representation 9 received from the storage location 40 to identify the audiovisual content 1. If they match within a selectable range, the audiovisual content 1 is identified and, at 735, the statistics of the content's audio 5 that may be stored at the storage location 40 may be used to bypass or adjust the audio processor enabling content that is already correct to pass with minimal or no modification to maintain original quality and compliance.

At 740, if a) metadata is not present or it does not include statistics of the content's audio 5 for a particular content or segment and b) the real-time audio signature of the audio portion 5 and the representation 9 do not match within a certain amount of time, real-time loudness and dynamic range controls may be performed to ensure that the audio portion 5 is compliant.

Upon reception of the audiovisual content 1, the method 700 may include synchronizing the ancillary data 7 to the audiovisual content 1. At 750, if metadata (e.g., EMDF) is present and it includes a time stamp, at 760, the ancillary data 7 may be synchronized to the audiovisual content 1 based on the time stamp. If metadata is not present or it does not include the time stamp, at 770, the method 700 aligns the representation 9 to the content's audio 5 as described above to synchronize the ancillary data 7 to the audiovisual content 1.

The consumer application or the interaction tools 38, now synchronized to the audiovisual content 1 may, at 780, display the ancillary data 7 in synchronicity with presentation of the audiovisual content 1 relying on the aligning of the representation 9 to the content's audio 5.

At 790, the method 700 may further communicate additional ancillary data 7 that may be viewed or accessed by other consumers, program producers, or possibly even advertisers. This data can also be used by downstream professional or consumer ad insertion mechanisms and owing to the detail-rich data that is present, potentially augmented by real-time updates or additions to that data, the insertions can be targeted with a much finer accuracy than previous static methods. The method 700 may continue to receive and store new ancillary data 7 during subsequent playout, broadcast, distribution, or performance of the audiovisual content 1. The new ancillary data 7 is pegged to the instants in a representation 9 of the content's audio 5 corresponding to instants in the audiovisual content 1 during the subsequent playout, broadcast, distribution, or performance.

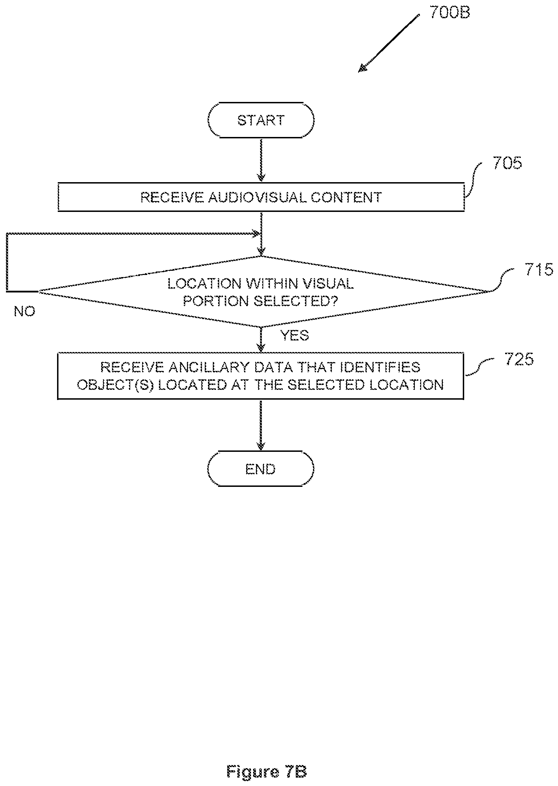

Figure 7B illustrates a flow diagram for an exemplary method 700B for a media environment driven content distribution platform. At 705, the method 700B includes receiving an audiovisual content including an audio portion and a visual portion. Subsequent alignment of the audio portion to synchronization data of the audiovisual content synchronizes ancillary data that identifies a set of coordinates representing a location within the visual portion of the audiovisual content to the audiovisual content. At 715, the method 700B detects selection of the location within the visual portion of the audiovisual content. If the selection has been made, at 725, the method 700B may include transmitting the set of coordinates representing the location within the visual portion of the audiovisual content. receiving ancillary data that identifies an object located within the visual portion of the audiovisual content at the location represented by the set of coordinates synchronized to the audiovisual content.

The method 700B may further include aligning the audio portion to the synchronization data of the audiovisual content to synchronize the ancillary data that identifies the set of coordinates representing the location within a visual portion of the audiovisual content and the object located within the visual portion of the audiovisual content at the location represented by the set of coordinates to the audiovisual content, and displaying the object located within the visual portion of the audiovisual content at the location represented by the set of coordinates in synchronicity with presentation of the audiovisual content relying on the aligning of the audio portion to the synchronization data.

The method 700B may further include receiving a second set of coordinates as additional ancillary data pegged to an instant in the synchronization data derived from the audio portion of the audiovisual content. The second set of coordinates corresponds to one or more of: a) coordinates of a real-world location, or b) coordinates representing a location within a visual portion of a second audiovisual content.

While the figures illustrate various actions occurring in serial, it is to be appreciated that various actions illustrated could occur substantially in parallel, and while actions may be shown occurring in parallel, it is to be appreciated that these actions could occur substantially in series. While a number of processes are described in relation to the illustrated methods, it is to be appreciated that a greater or lesser number of processes could be employed and that lightweight processes, regular processes, threads, and other approaches could be employed. It is to be appreciated that other exemplary methods may, in some cases, also include actions that occur substantially in parallel. The illustrated exemplary methods and other embodiments may operate in real-time, faster than real-time in a software or hardware or hybrid software/hardware implementation, or slower than real time in a software or hardware or hybrid software/hardware implementation.

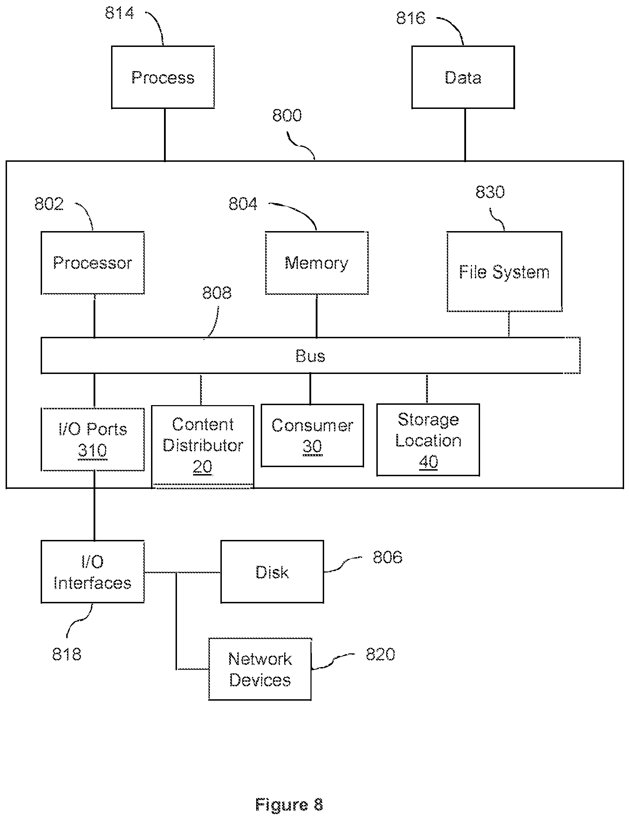

**Figure 8** illustrates a block diagram of an exemplary machine 800 for synchronizing ancillary data to content including audio. The machine 800 includes a processor 802, a memory 804, and I/O Ports 810 operably connected by a bus 808.

In one example, the machine 800 may receive input signals including the audiovisual content 1, the visual portion 3, the audio portion 5, the ancillary data 7, the representation 9, etc. via, for example, I/O Ports 810 or I/O Interfaces 818. The machine 800 may also include the pre-synchronizer 22, the transceiver 24, the audio processor 26, and the authoring tools 28 of the content distributor 20. The machine 800 may also include the transceiver 32, the post-synchronizer 34, the audio processor 36, and the interaction tools 38 of the consumer 30. The machine 800 may also include the transceiver 42 and the database 44 of the storage location 40. Thus, the content distributor 20, the consumer 30, or the storage location 40 may be implemented in machine 1700 as hardware, firmware, software, or a combination thereof and, thus, the machine 1700 and its components may provide means for performing functions described and/or claimed herein as performed by the pre-synchronizer 22, the transceiver 24, the audio processor 26, the authoring tools 28, the transceiver 32, the post-synchronizer 34, the audio processor 36, the interaction tools 38, the transceiver 42 and the database 44.

The processor 802 can be a variety of various processors including dual microprocessor and other multi-processor architectures. The memory 804 can include volatile memory or non-volatile memory. The non-volatile memory can include, but is not limited to, ROM, PROM, EPROM, EEPROM, and the like. Volatile memory can include, for example, RAM, synchronous RAM (SRAM), dynamic RAM (DRAM), synchronous DRAM (SDRAM), double data rate SDRAM (DDR SDRAM), and direct RAM bus RAM (DRRAM).

A disk 806 may be operably connected to the machine 800 via, for example, an I/O Interfaces (e.g., card, device) 818 and an I/O Ports 810. The disk 806 can include, but is not limited to, devices like a magnetic disk drive, a solid state disk drive, a floppy disk drive, a tape drive, a Zip drive, a flash memory card, or a memory stick. Furthermore, the disk 806 can include optical drives like a CD-ROM, a CD recordable drive (CD-R drive), a CD rewriteable drive (CD-RW drive), or a digital video ROM drive (DVD ROM). The memory 804 can store processes 814 or data 816, for example. The disk 806 or memory 804 can store an operating system that controls and allocates resources of the machine 800.

The bus 808 can be a single internal bus interconnect architecture or other bus or mesh architectures. While a single bus is illustrated, it is to be appreciated that machine 800 may communicate with various devices, logics, and peripherals using other busses that are not illustrated (e.g., PCIE, SATA, Infiniband, 1394, USB, Ethernet). The bus 808 can be of a variety of types including, but not limited to, a memory bus or memory controller, a peripheral bus or external bus, a crossbar switch, or a local bus. The local bus can be of varieties including, but not limited to, an industrial standard architecture (ISA) bus, a microchannel architecture (MCA) bus, an extended ISA (EISA) bus, a peripheral component interconnect (PCI) bus, a universal serial (USB) bus, and a small computer systems interface (SCSI) bus.

The machine 800 may interact with input/output devices via I/O Interfaces 818 and I/O Ports 810. Input/output devices can include, but are not limited to, a keyboard, a microphone, a pointing and selection device, cameras, video cards, displays, disk 806, network devices 820, and the like. The I/O Ports 810 can include but are not limited to, serial ports, parallel ports, and USB ports.

The machine 800 can operate in a network environment and thus may be connected to network devices 820 via the I/O Interfaces 818, or the I/O Ports 810. Through the network devices 820, the machine 800 may interact with a network. Through the network, the machine 800 may be logically connected to remote computers. The networks with which the machine 800 may interact include, but are not limited to, a local area network (LAN), a wide area network (WAN), and other networks. The network devices 820 can connect to LAN technologies including, but not limited to, fiber distributed data interface (FDDI), copper distributed data interface (CDDI), Ethernet (IEEE 802.3), token ring (IEEE 802.5), wireless computer communication (IEEE 802.11), Bluetooth (IEEE 802.15.1), Zigbee (IEEE 802.15.4) and the like. Similarly, the network devices 820 can connect to WAN technologies including, but not limited to, point to point links, circuit switching networks like integrated services digital networks (ISDN), packet switching networks, and digital subscriber lines (DSL). While individual network types are described, it is to be appreciated that communications via, over, or through a network may include combinations and mixtures of communications.

### DEFINITIONS

The following includes definitions of selected terms employed herein. The definitions include various examples or forms of components that fall within the scope of a term and that may be used for implementation. The examples are not intended to be limiting. Both singular and plural forms of terms may be within the definitions.

"Content" corresponds to still images, segments of audio media, video media, or audio/visual (AV) media and include information that is embodied, stored, transmitted, received, processed, or otherwise used with at least one medium. Common media content formats include FLV format (flash video), Windows Media Video, RealMedia, MFX, Quicktime, MPEG, MP3, DivX, JPEGs, and Bitmaps. As used herein, the terms "media clips", "media content," "information content," and "content" may be used interchangeably.

"Data store" or "database," as used herein, refers to a physical or logical entity that can store data. A data store may be, for example, a database, a table, a file, a list, a queue, a heap, a memory, a register, and so on. A data store may reside in one logical or physical entity or may be distributed between two or more logical or physical entities.

"Logic," as used herein, includes but is not limited to hardware, firmware, software or combinations of each to perform a function(s) or an action(s), or to cause a function or action from another logic, method, or system. For example, based on a desired application or needs, logic may include a software controlled microprocessor, discrete logic like an application specific integrated circuit (ASIC), a programmed logic device, a memory device containing instructions, or the like. Logic may include one or more gates, combinations of gates, or other circuit components. Logic may also be fully embodied as software. Where multiple logical logics are described, it may be possible to incorporate the multiple logical logics into one physical logic. Similarly, where a single logical logic is described, it may be possible to distribute that single logical logic between multiple physical logics.

An "operable connection," or a connection by which entities are "operably connected," is one in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control. For example, two entities can be operably connected by being able to communicate signals to each other directly or through one or more intermediate entities like a processor, operating system, a logic, software, or other entity. Logical or physical communication channels can be used to create an operable connection.

In broadcasting, "playout" is a term for the transmission of radio or TV channels from the broadcaster into broadcast networks that delivers the content to the audience.

"Signal," as used herein, includes but is not limited to one or more electrical or optical signals, analog or digital signals, data, one or more computer or processor instructions, messages, a bit or bit stream, or other means that can be received, transmitted, or detected.

"Software," as used herein, includes but is not limited to, one or more computer or processor instructions that can be read, interpreted, compiled, or executed and that cause a computer, processor, or other electronic device to perform functions, actions or behave in a desired manner. The instructions may be embodied in various forms like routines, algorithms, modules, methods, threads, or programs including separate applications or code from dynamically or statically linked libraries. Software may also be implemented in a variety of executable or loadable forms including, but not limited to, a stand-alone program, a function call (local or remote), a servlet, an applet, instructions stored in a memory, part of an operating system or other types of executable instructions. It will be appreciated by one of ordinary skill in the art that the form of software may depend, for example, on requirements of a desired application, the environment in which it runs, or the desires of a designer/programmer or the like. It will also be appreciated that computer-readable or executable instructions can be located in one logic or distributed between two or more communicating, co-operating, or parallel processing logics and thus can be loaded or executed in serial, parallel, massively parallel and other manners.

Suitable software for implementing the various components of the example systems and methods described herein may be produced using programming languages and tools like Java, Pascal, C#, C++, C, CGI, Perl, SQL, APIs, SDKs, assembly, firmware, microcode, or other languages and tools. Software, whether an entire system or a component of a system, may be embodied as an article of manufacture and maintained or provided as part of a computer-readable medium as defined previously. Another form of the software may include signals that transmit program code of the software to a recipient over a network or other communication medium. Thus, in one example, a computer-readable medium has a form of signals that represent the software/firmware as it is downloaded from a web server to a user. In another example, the computer-readable medium has a form of the software/firmware as it is maintained on the web server. Other forms may also be used.

"User" or "consumer," as used herein, includes but is not limited to one or more persons, software, computers or other devices, or combinations of these.

Some portions of the detailed descriptions that follow are presented in terms of algorithms and symbolic representations of operations on data bits within a memory. These algorithmic descriptions and representations are the means used by those skilled in the art to convey the substance of their work to others. An algorithm is here, and generally, conceived to be a sequence of operations that produce a result. The operations may include physical manipulations of physical quantities. Usually, though not necessarily, the physical quantities take the form of electrical or magnetic signals capable of being stored, transferred, combined, compared, and otherwise manipulated in a logic and the like.

It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. Unless specifically stated otherwise, it is appreciated that throughout the description, terms like processing, computing, calculating, determining, displaying, or the like, refer to actions and processes of a computer system, logic, processor, or similar electronic device that manipulates and transforms data represented as physical (electronic) quantities.

For ease of explanation, the present disclosure describes examples in the context of the nomenclature described in ETSI TS 102 366 (Annex H) such as, for example, the Extensible Metadata Format (EMDF) used to carry information and control data about audio signals into which it is embedded. The principles of the present disclosure, however, are not limited to that context and may be practiced in various other contexts including any such embedded metadata schemes included with any compressed audio including ETSI TS 103 190 (section 4.3.15) or baseband PCM audio system including metadata as described in ATSC A52:2012 and A/85:2013 or even the SMPTE 337M standard.

To the extent that the term "includes" or "including" is employed in the detailed description or the claims, it is intended to be inclusive in a manner similar to the term "comprising" as that term is interpreted when employed as a transitional word in a clause. Furthermore, to the extent that the term "or" is employed in the detailed description or claims (e.g., A or B) it is intended to mean "A or B or both". When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995).

While example systems, methods, and so on, have been illustrated by describing examples, and while the examples have been described in considerable detail, it is not the intention of the applicants to restrict or in any way limit scope to such detail. It is, of course, not possible to describe every conceivable combination of components or methodologies for purposes of describing the systems, methods, and so on, described herein. Additional advantages and modifications will readily appear to those skilled in the art. Therefore, the invention is not limited to the specific details, the representative apparatus, and illustrative examples shown and described. Thus, this application is intended to embrace alterations, modifications, and variations that fall within the scope of the appended claims. Furthermore, the preceding description is not meant to limit the scope of the invention. Rather, the scope of the invention is to be determined by the appended claims and their equivalents.

Also disclosed are example according to the following clauses
1. A machine or group of machines for a media environment driven content distribution platform, comprising:
   a pre-synchronizer configured to obtain synchronization data derived from an audio portion or a visual portion of an audiovisual content and ancillary data that identifies a set of coordinates representing a location within the visual portion of the audiovisual content, the ancillary data pegged to instants in the synchronization data; and
   a transceiver configured to communicate the synchronization data and the ancillary data pegged to the instants in the synchronization data such that subsequent alignment of the synchronization data to the audiovisual content synchronizes the set of coordinates representing the location within the visual portion of the audiovisual content.
2. The machine or group of machines of clause 1, wherein:
   the pre-synchronizer is configured to obtain ancillary data that identifies an object located within the visual portion of the audiovisual content at the location represented by the set of coordinates pegged to the instants in the synchronization data, and
   the transceiver is configured to communicate the synchronization data and the ancillary data pegged to the instants in the synchronization data such that subsequent alignment of the synchronization data to the audiovisual content synchronizes the set of coordinates representing the location within the visual portion of the audiovisual content to the object located within the visual portion of the audiovisual content at the location represented by the set of coordinates to the audiovisual content.
3. The machine or group of machines of clause 2, comprising:
   a processor configured to derive the synchronization data from the audio portion or the visual portion of the audiovisual content, wherein
   the pre-synchronizer is configured to peg the ancillary data that identifies the set of coordinates and the object to the instants in the synchronization data; and
   the transceiver is configured to communicate the synchronization data and the ancillary data pegged to the instants in the synchronization data to a database accessible by consumers of the audiovisual content.
4. The machine or group of machines of clause 2, comprising:
   a processor configured to derive the synchronization data from the audio portion or the visual portion of the audiovisual content, wherein
   the pre-synchronizer is configured to peg the ancillary data that identifies the set of coordinates and the object to instants in the synchronization data, and
   the transceiver is configured to store the synchronization data and the ancillary data pegged to the instants in the synchronization data to a storage location.
5. The machine or group of machines of clause 2, comprising:
   authoring tools configured to place the object within the visual portion of the audiovisual content at the location represented by the set of coordinates.
6. The machine or group of machines of clause 1, wherein:
   the transceiver is configured to store the synchronization data and the ancillary data pegged to the instants in the synchronization data to a storage location,
   the pre-synchronizer is configured to create a link to the storage location; and
   a processor is configured to insert the link to the storage location into metadata of the audiovisual content.
7. The machine or group of machines of clause 1, wherein:
   the pre-synchronizer is configured to collect the ancillary data during a previous playout or performance of the audiovisual content and to peg the ancillary data to instants in the synchronization data corresponding to instants in the audiovisual content.
8. The machine or group of machines of clause 1, comprising:
   authoring tools configured to peg the second set of coordinates as additional ancillary data to the instants in the synchronization data such that the set of coordinates representing the location within the visual portion of the audiovisual content correlate to the second set of coordinates, wherein the second set of coordinates corresponds to one or more of:
   coordinates of a real-world location,
   coordinates representing a location within a visual portion of a second audiovisual content.
9. A machine or group of machines for a media environment driven content distribution platform, comprising:
   a transceiver configured to receive an audiovisual content including at least an audio portion and a visual portion such that subsequent alignment of the audio portion or the visual portion to synchronization data of the audiovisual content synchronizes ancillary data that identifies a set of coordinates representing a location within the visual portion of the audiovisual content; and
   interaction tools configured to detect selection of the location within the visual portion of the audiovisual content and transmit the set of coordinates representing the location within the visual portion of the audiovisual content.
10. The machine or group of machines of clause 9, wherein:
   the transceiver further configured to receive ancillary data that identifies an object located within the visual portion of the audiovisual content at the location represented by the set of coordinates synchronized to the audiovisual content.
11. The machine or group of machines of clause 10, comprising:
   a post-synchronizer configured to align the audio portion or the visual portion to the synchronization data of the audiovisual content to synchronize the ancillary data that identifies the set of coordinates representing the location within a visual portion of the audiovisual content and the object located within the visual portion of the audiovisual content at the location represented by the set of coordinates to the audiovisual content.
12. The machine or group of machines of clause 10, comprising:
   a post-synchronizer configured to align the audio portion or the visual portion to the synchronization data of the audiovisual content to synchronize the ancillary data that identifies the set of coordinates representing the location within a visual portion of the audiovisual content and the object located within the visual portion of the audiovisual content at the location represented by the set of coordinates to the audiovisual content, wherein
   the interaction tools are configured to display the object located within the visual portion of the audiovisual content at the location represented by the set of coordinates in synchronicity with presentation of the audiovisual content relying on the aligning of the audio portion or the visual portion to the synchronization data.
13. The machine or group of machines of clause 9, wherein:
   the transceiver is configured to receive the set of coordinates representing the location within the visual portion of the audiovisual content and a second set of coordinates as additional ancillary data pegged to an instant in the synchronization data, wherein the second set of coordinates corresponds to one or more of:
   coordinates of a real-world location, and
   coordinates representing a location within a visual portion of a second audiovisual content.
14. A machine or group of machines for a media environment driven content distribution platform, comprising:
   a database configured to store a representation of an audiovisual content's audio or video and ancillary data that identifies a set of coordinates representing a location within a visual portion of the audiovisual content pegged to instants in the representation of the audiovisual content's audio or video such that subsequent alignment of the representation of the audiovisual content's audio or video to an audio portion or a visual portion of the audiovisual content synchronizes the ancillary data pegged to the instants in the representation of the audiovisual content's audio or video to the audiovisual content; and
   a transceiver configured to communicate the representation of the audiovisual content's audio or video and the ancillary data pegged to the instants in the representation of the audiovisual content's audio or video.
15. The machine or group of machines of clause 14, wherein
   the database is configured to store ancillary data that identifies an object located within the visual portion of the audiovisual content at the location represented by the set of coordinates pegged to the instants in the representation of the audiovisual content's audio or video such that subsequent alignment of the representation of the audiovisual content's audio or video to an audio portion or a visual portion of the audiovisual content synchronizes the ancillary data that identifies the set of coordinates representing the location within the visual portion of the audiovisual content and the ancillary data that identifies the object located within the visual portion of the audiovisual content at the location represented by the set of coordinates.
16. The machine or group of machines of clause 15, wherein
   the transceiver is configured to receive the set of coordinates representing the location within the visual portion of the audiovisual content and, in response to receiving the set of coordinates representing the location within the visual portion of the audiovisual content, transmit the ancillary data that identifies the object located within the visual portion of the audiovisual content at the location represented by the set of coordinates, or
   the transceiver is configured to receive data that identifies the object located within the visual portion of the audiovisual content at the location represented by the set of coordinates and, in response to receiving the data that identifies the object located within the visual portion of the audiovisual content at the location represented by the set of coordinates, transmit the ancillary data that identifies the set of coordinates representing the location within the visual portion of the audiovisual content.
17. The machine or group of machines of clause 14, wherein
   the transceiver is configured to communicate the set of coordinates representing the location within the visual portion of the audiovisual content and a second set of coordinates as additional ancillary data pegged to an instant in the synchronization data derived from the audio portion or visual portion of the audiovisual content, wherein the second set of coordinates corresponds to one or more of:
   coordinates of a real-world location, and
   coordinates representing a location within a visual portion of a second audiovisual content.
18. A method for a media environment driven content distribution platform, the method comprising:
   obtaining synchronization data derived from an audio portion or visual portion of an audiovisual content and ancillary data that identifies a set of coordinates representing a location within a visual portion of the audiovisual content, the ancillary data pegged to instants in the synchronization data; and
   communicating the synchronization data and the ancillary data pegged to the instants in the synchronization data such that subsequent alignment of the synchronization data to the audiovisual content synchronizes the set of coordinates representing the location within the visual portion of the audiovisual content.
19. The method of clause 18, comprising:
   obtaining ancillary data that identifies an object located within the visual portion of the audiovisual content at the location represented by the set of coordinates, the ancillary data that identifies the object pegged to the instants in the synchronization data such that subsequent alignment of the synchronization data to the audiovisual content synchronizes the set of coordinates representing the location within the visual portion of the audiovisual content and the object located within the visual portion of the audiovisual content at the location represented by the set of coordinates to the audiovisual content.
20. The method of clause 19, comprising:
   pegging the ancillary data that identifies the set of coordinates and the object to instants in the synchronization data derived from the audio portion or the visual portion; and
   storing the synchronization data derived from the audio portion or the visual portion of the audiovisual content and the ancillary data pegged to the instants in the synchronization data to a database.
21. The method of clause 19, comprising:
   obtaining the audiovisual content including at least the audio portion and the visual portion;
   deriving the synchronization data from the audio portion or the visual portion of the audiovisual content; and
   pegging the ancillary data that identifies the set of coordinates and the object to instants in the synchronization data derived from the audio portion or the visual portion.
22. The method of clause 19, comprising:
   placing the object within the visual portion of the audiovisual content at the location represented by the set of coordinates.
23. The method of clause 19, comprising:
   collecting the ancillary data that identifies the set of coordinates representing the location within the visual portion of the audiovisual content and the object located within the visual portion of the audiovisual content at the location represented by the set of coordinates during a playout or performance of the audiovisual content, wherein the synchronization data derived from the audio portion or the visual portion of the audiovisual content is derived during the playout or performance from the audiovisual content, and wherein the ancillary data that identifies the set of coordinates representing the location within the visual portion of the audiovisual content and the object located within the visual portion of the audiovisual content at the location represented by the set of coordinates is pegged to the instants in the synchronization data derived from the audio portion or the visual portion of the audiovisual content corresponding to instants in the audiovisual content during the playout or performance.
24. The method of clause 18, comprising:
   creating the synchronization data derived from the audio portion or the visual portion of the audiovisual content and pegging the ancillary data to the instants in the synchronization data derived from the audio portion or the visual portion of the audiovisual content; and
   storing the synchronization data derived from the audio portion or the visual portion of the audiovisual content and the ancillary data pegged to the instants in the synchronization data to a storage location.
25. The method of clause 18, comprising:
   obtaining ancillary data that identifies a second set of coordinates pegged to the instants in the synchronization data derived from the audio portion or the visual portion of the audiovisual content such that the second set of coordinates correlate to the set of coordinates representing the location within the visual portion of the audiovisual content, wherein the second set of coordinates corresponds to one or more of:
   coordinates of a real-world location, or
   coordinates representing a location within a visual portion of a second audiovisual content.
26. A method for a media environment driven content distribution platform, the method comprising:
   receiving an audiovisual content including an audio portion and a visual portion such that subsequent alignment of the audio portion or the visual portion to synchronization data of the audiovisual content synchronizes ancillary data that identifies a set of coordinates representing a location within the visual portion of the audiovisual content to the audiovisual content; and
   detecting selection of the location within the visual portion of the audiovisual content and transmitting the set of coordinates representing the location within the visual portion of the audiovisual content.
27. The method of clause 26, comprising:
   receiving ancillary data that identifies an object located within the visual portion of the audiovisual content at the location represented by the set of coordinates synchronized to the audiovisual content.
28. The method of clause 27, comprising:
   aligning the audio portion or the visual portion to the synchronization data of the audiovisual content to synchronize the ancillary data that identifies the set of coordinates representing the location within a visual portion of the audiovisual content and the object located within the visual portion of the audiovisual content at the location represented by the set of coordinates to the audiovisual content.
29. The method of clause 27, comprising:
   aligning the audio portion or the visual portion to the synchronization data of the audiovisual content to synchronize the ancillary data that identifies the set of coordinates representing the location within a visual portion of the audiovisual content and the object located within the visual portion of the audiovisual content at the location represented by the set of coordinates to the audiovisual content, and
   displaying the object located within the visual portion of the audiovisual content at the location represented by the set of coordinates in synchronicity with presentation of the audiovisual content relying on the aligning of the audio portion or the visual portion to the synchronization data.
30. The method of clause 26, comprising:
   receiving a second set of coordinates as additional ancillary data pegged to an instant in the synchronization data, wherein the second set of coordinates corresponds to one or more of:
   coordinates of a real-world location, and
   coordinates representing a location within a visual portion of a second audiovisual content.
31. A method for a media environment driven content distribution platform, the method comprising:
   storing a representation of an audiovisual content's audio or video and ancillary data that identifies a set of coordinates representing a location within a visual portion of the audiovisual content pegged to instants in the representation of the audiovisual content's audio such that subsequent alignment of the representation of the audiovisual content's audio or video to an audio portion or visual portion of the audiovisual content synchronizes the ancillary data pegged to the instants in the representation of the audiovisual content's audio or video to the audiovisual content; and
   transmitting the representation of the audiovisual content's audio or video and the ancillary data pegged to the instants in the representation of the audiovisual content's audio or video.
32. The method of clause 31, comprising:
   storing ancillary data that identifies an object located within the visual portion of the audiovisual content at the location represented by the set of coordinates pegged to the instants in the representation of the audiovisual content's audio or video.
33. The method of clause 32, comprising:
   receiving the set of coordinates representing the location within the visual portion of the audiovisual content; and
   in response to receiving the set of coordinates representing the location within the visual portion of the audiovisual content, transmitting the ancillary data that identifies the object located within the visual portion of the audiovisual content at the location represented by the set of coordinates.
34. The method of clause 32, comprising:
   receiving data that identifies the object located within the visual portion of the audiovisual content at the location represented by the set of coordinates; and
   in response to receiving the data that identifies the object located within the visual portion of the audiovisual content at the location represented by the set of coordinates, transmitting the ancillary data that identifies the set of coordinates representing the location within the visual portion of the audiovisual content.
35. The method of clause 31, comprising:
   communicating the set of coordinates representing the location within the visual portion of the audiovisual content pegged to an instant in the synchronization data and a second set of coordinates as additional ancillary data pegged to the instant in the synchronization data, wherein the second set of coordinates corresponds to one or more of:
   coordinates of a real-world location, and
   coordinates representing a location within a visual portion of a second audiovisual content.

## Claims

1. A machine or group of machines for a media environment driven content distribution platform, comprising:
a transceiver configured to receive a first audiovisual content including at least an audio portion and a visual portion such that subsequent alignment of the audio portion to synchronization data of the first audiovisual content synchronizes ancillary data that identifies a set of coordinates representing a location within the visual portion of the first audiovisual content to the first audiovisual content; and
interaction tools configured to detect selection of the location within the visual portion of the first audiovisual content and transmit the set of coordinates representing the location within the visual portion of the first audiovisual content,
wherein the set of coordinates representing the location within the visual portion of the first audiovisual content also corresponds to coordinates representing a location within a visual portion of a second audiovisual content different from the first audiovisual content indicating that the location within the visual portion of the first audiovisual content corresponds to the location within the visual portion of the second audiovisual content.

2. The machine or group of machines of claim 1, wherein:
the transceiver is further configured to receive ancillary data that identifies an object located within the visual portion of the first audiovisual content at the location represented by the set of coordinates synchronized to the first audiovisual content.

3. The machine or group of machines of claim 2, comprising:
a post-synchronizer configured to align the audio portion to the synchronization data of the first audiovisual content to synchronize the ancillary data that identifies the set of coordinates representing the location within the visual portion of the first audiovisual content and the object located within the visual portion of the first audiovisual content at the location represented by the set of coordinates to the first audiovisual content.

4. The machine or group of machines of claim 2, comprising:
a post-synchronizer configured to align the audio portion to the synchronization data of the first audiovisual content to synchronize the ancillary data that identifies the set of coordinates representing the location within the visual portion of the first audiovisual content and the object located within the visual portion of the first audiovisual content at the location represented by the set of coordinates to the first audiovisual content, wherein
the interaction tools are configured to display the object located within the visual portion of the first audiovisual content at the location represented by the set of coordinates in synchronicity with presentation of the first audiovisual content relying on the aligning of the audio portion to the synchronization data.

5. The machine or group of machines of claim 1, wherein:
the transceiver is configured to receive the set of coordinates representing the location within the visual portion of the first audiovisual content and a second set of coordinates as additional ancillary data correlated to the synchronization data, wherein the second set of coordinates corresponds to
coordinates representing a location within a visual portion of a second audiovisual content.

6. The machine or group of machines of claim 1, wherein the second audiovisual content corresponds to virtual reality VR or augmented reality AR or mixed reality MR content.

7. A method for a media environment driven content distribution platform, the method comprising:
receiving a first audiovisual content including an audio portion and a visual portion such that subsequent alignment of the audio portion to synchronization data of the first audiovisual content synchronizes ancillary data that identifies a set of coordinates representing a location within the visual portion of the first audiovisual content to the first audiovisual content; and
detecting selection of the location within the visual portion of the first audiovisual content and transmitting the set of coordinates representing the location within the visual portion of the first audiovisual content,
wherein the set of coordinates representing the location within the visual portion of the first audiovisual content also corresponds to coordinates representing a location within a visual portion of a second audiovisual content different from the first audiovisual content indicating that the location within the visual portion of the first audiovisual content corresponds to the location within the visual portion of the second audiovisual content.

8. The method of claim 7, comprising:
receiving ancillary data that identifies an object located within the visual portion of the first audiovisual content at the location represented by the set of coordinates synchronized to the first audiovisual content.

9. The method of claim 8, comprising:
aligning the audio portion to the synchronization data of the first audiovisual content to synchronize the ancillary data that identifies the set of coordinates representing the location within the visual portion of the first audiovisual content and the object located within the visual portion of the first audiovisual content at the location represented by the set of coordinates to the first audiovisual content.

10. The method of claim 8, comprising:
aligning the audio portion to the synchronization data of the first audiovisual content to synchronize the ancillary data that identifies the set of coordinates representing the location within the visual portion of the first audiovisual content and the object located within the visual portion of the first audiovisual content at the location represented by the set of coordinates to the first audiovisual content, and
displaying the object located within the visual portion of the first audiovisual content at the location represented by the set of coordinates in synchronicity with presentation of the first audiovisual content relying on the aligning of the audio portion to the synchronization data.

11. The method of claim 7, comprising:
receiving a second set of coordinates as additional ancillary data correlated to the synchronization data, wherein the second set of coordinates corresponds to
coordinates representing a location within a visual portion of a second audiovisual content.

12. The method of claim 7, wherein the second audiovisual content corresponds to virtual reality VR or augmented reality AR or mixed reality MR content.
